# EUROPÄISCHE PATENTSCHRIFT

(11) **EP 1 922 133 B1**
(45) Veröffentlichungstag und Bekanntmachung des Hinweises auf die Patenterteilung: **04.11.2009**
(21) Anmeldenummer: 06775938.1
(22) Anmeldetag: 08.09.2006
(51) Int. Cl.: B01D 53/26, F24F 3/14

(54) **KLIMAGERÄT**
AIR-CONDITIONING DEVICE
APPAREIL DE CLIMATISATION

(30) Priorität: 10.09.2005 DE 202005014282 U
(43) Veröffentlichungstag der Anmeldung: 21.05.2008
(73) Patentinhaber: Blum, Theodor, 79244 Münsteral (DE)
(72) Erfinder: Blum, Theodor, 79244 Münsteral (DE)
(74) Vertreter: Zimmermann, Günter
(86) Internationale Anmeldenummer: PCT/DE2006/001577
(87) Internationale Veröffentlichungsnummer: WO 2007/028373

(56) Entgegenhaltungen:
- EP-A1- 1 048 339
- EP-A1- 1 521 040
- EP-A2- 0 369 950
- US-A- 4 429 735
- US-A1- 2002 139 127

## Beschreibung

Die Erfindung bezieht sich auf ein Klimagerät mit einem Zuluftstrom und einem Abluftstrom, wobei im Zuluftstrom ein Zerstäuber für Wasser zur Luftbefeuchtung und/oder eine Luftentfeuchtung vorgesehen ist.

Ein derartiges Klimagerät ist durch die EP 0369 950 B1 oder die US-A-4 429735 bekannt. Das Klimagerät weist einen piezoelektrischen Ultraschallgeber als Wasserzerstäuber zur Luftbefeuchtung auf. Weiterhin ist eine Entfeuchtung der Luft vorgesehen, welche mittels eines ersten Wärmetauschers in Kombination mit einem zweiten Wärmetauscher durchgeführt wird. Bei diesem Klimagerät kann nachteiligerweise der Feuchtigkeitsgehalt des Zuluftstromes nicht zufriedenstellend geregelt werden.

Die Aufgabe der Erfindung wird somit darin gesehen, das Klimagerät der eingangs genannten Art derart weiterzuentwickeln, daß der Feuchtigkeitsgehalt der Zuluft kontinuierlich geregelt werden kann.

Zur Lösung dieser Aufgabe wird erfindungsgemäß vorgeschlagen, daß bei einem Klimagerät gemäß dem Oberbegriff des Anspruchs 1 ein für Wassermoleküle und/oder Wasserstoffmoleküle durchlässiger und in seiner Entfeuchtungsleistung verstellbarer Filter zur Luftentfeuchtung angeordnet ist, wobei der Filter einen undurchlässigen Mantel und eine durchlässige Membran aufweist, welche zur Verstellung der Entfeuchtungsleistung gegeneinander verschiebbar sind, und der Zuluftstrom teilweise oder vollständig in einem Zwischenraum zwischen dem Mantel und der Membran verläuft.

Durch den Zerstäuber wird der Feuchtigkeitsgehalt in der Zuluft erhöht, während zusätzlich oder alternativ der Filter den Feuchtigkeitsgehalt in der Zuluft verringert. Damit kann die Luftfeuchte stetig geregelt werden. Der Filter hat eine verstellbare Entfeuchtungsleistung. Der Grad der Entfeuchtung kann durch die Menge an Zuluft erreicht werden, welche an dem Filter vorbeistreicht. Deshalb weist der Filter einen undurchlässigen Mantel und eine durchlässige Membran auf, welche zur Verstellung der Entfeuchtungsleistung gegeneinander verschiebbar sind, wobei der Zuluftstrom teilweise bis vollständig im Zwischenraum zwischen dem Mantel und der Membran verläuft. Bei geschlossenem Filter liegt der Mantel an der Membran an, so daß es keinen Zwischenraum mehr gibt, in welchem der Zuluftstrom verlaufen könnte. Eine Luftentfeuchtung findet dann nicht mehr statt. Ist der Filter offen, so besteht ein maximaler Zwischenraum zwischen dem Mantel und der Membran und die Zuluft strömt vollständig zwischen dem Mantel und der Membran in diesen Zwischenraum, so daß eine maximale Entfeuchtungsleistung gegeben ist.

Zur Luftbefeuchtung sieht eine Ausführungsform der Erfindung vor, daß der Zerstäuber ein Piezokristall ist, um eine besonders effektive Verteilung der Wassermoleküle zu erreichen.

Um eine zuverlässige und trotzdem konstruktiv einfache Verstellmöglichkeit für die Entfeuchtungsleistung des Filters zu schaffen, ist vorteilhafterweise der Mantel und die Membran kegelförmig ausgebildet, wobei die Membran innerhalb des Mantels angeordnet ist und der Mantel federbeaufschlagt und axial verschiebbar ist. Über einen Stellantrieb kann der Mantel gegenüber der Membran zur Erzeugung des Zwischenraumes verschoben werden.

Eine weitere Ausführungsform der Erfindung sieht vor, daß der Filter in geschlossenem Zustand eine Trennwand zwischen einer Zuluftkammer und einer Fortluftkammer bildet. Ist keine Luftentfeuchtung erwünscht, dann ist der Filter geschlossen und durch die vollständige Trennung von Zuluftkammer und Fortluftkammer strömt die Zuluft vollständig in den zu klimatisierenden Raum, während die Abluft nach draußen strömt. Diese vollständige Abtrennung besteht bei teilweise geöffnetem oder vollständig geöffnetem Filter nicht mehr. Bei geöffnetem Filter strömt ein Teil der Feuchte von der Zuluft durch die Membran in die Fortluftkammer und wird weiter nach draußen transportiert.

Mit einer geeigneten elektrischen Spannung kann die Trennung der Wassermoleküle und/oder Wasserstoffmoleküle von den übrigen Molekülen in der Luft begünstigt werden. Eine weitere Ausgestaltung der Erfindung sieht deshalb vor, daß der Mantel aus Metall ist und eine Elektrode bildet und eine Gegenelektrode innerhalb oder außerhalb der Membran angeordnet ist. Die Gegenelektrode ist zweckmäßigerweise ein Metallgitter.

Die Erfindung wird nachstehend anhand der Zeichnung näher erläutert. Die Zeichnung zeigt Ausführungsbeispiele der Erfindung. Hierbei stellen dar:

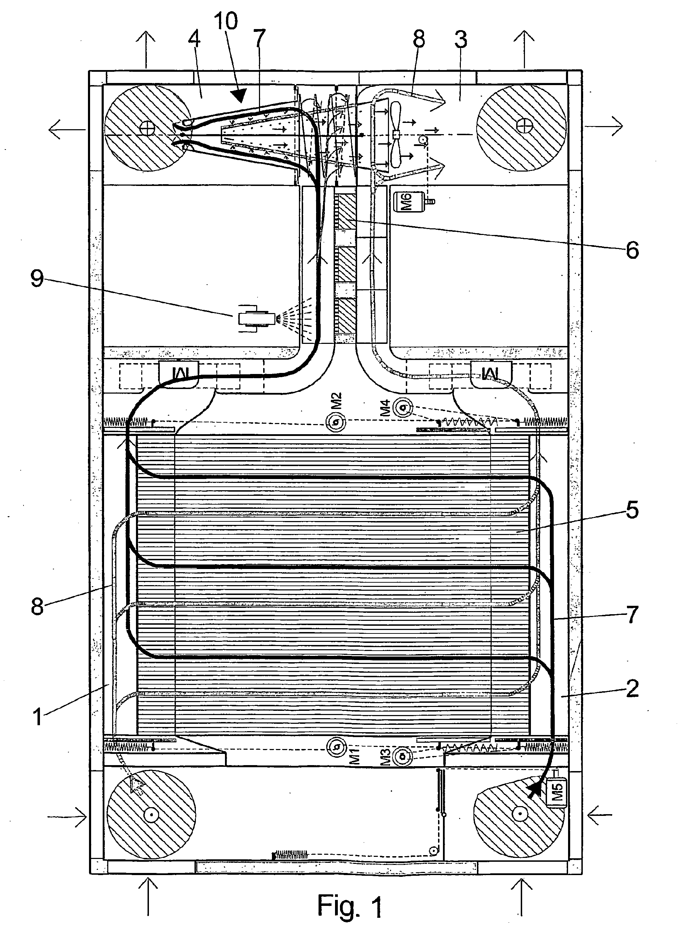

Fig. 1 einen Querschnitt durch eine erste Ausführungsform des erfindungsgemäßen Klimageräts,
Fig. 2 eine abgebrochene Darstellung nach Fig. 1 mit geschlossenem Filter,
Fig. 3 eine abgebrochene Darstellung nach Fig. 1 mit teilweise geöffnetem Filter,
Fig. 4 eine abgebrochene Darstellung nach Fig. 1 mit offenem Filter,
Fig. 5 eine Explosionszeichnung des Filters und
Fig. 6 einen Querschnitt durch eine zweite Ausführungsform des Klimageräts.

Das Klimagerät weist eine Abluftkammer 1, eine Frischluftkammer 2, eine Fortluftkammer 3, eine Zuluftkammer 4, einen Gegenstromwärmetauscher 5 und eine Peltierkaskade 6 auf. Ein Zuluftstrom 7 verläuft von der Frischluftkammer 2 durch den Gegenstromwärmetauscher 5, vorbei an einer Warmseite der Peltierkaskade 6 und durch die Zuluftkammer 4 in einen zu klimatisierenden Raum. Ein Abluftstrom 8 verläuft von der Abluftkammer 1 durch den Gegenstromwärmetauscher 5, vorbei an einer Kaltseite der Peltierkaskade 6 und durch die Fortluftkammer 3 nach draußen. Im Bereich der Peltierkaskade 6 ist nahe dem Zuluftstrom 7 ein Zerstäuber 9 für Wasser zur Luftbefeuchtung angeordnet. In der Zuluftkammer 4 ist im Bereich des Zuluftstromes 7 ein Filter 10 zur Luftentfeuchtung angeordnet. Der Filter 10 ist in seiner Entfeuchtungsleistung verstellbar, so daß der gewünschte Feuchtigkeitsgehalt der Zuluft eingestellt werden kann.

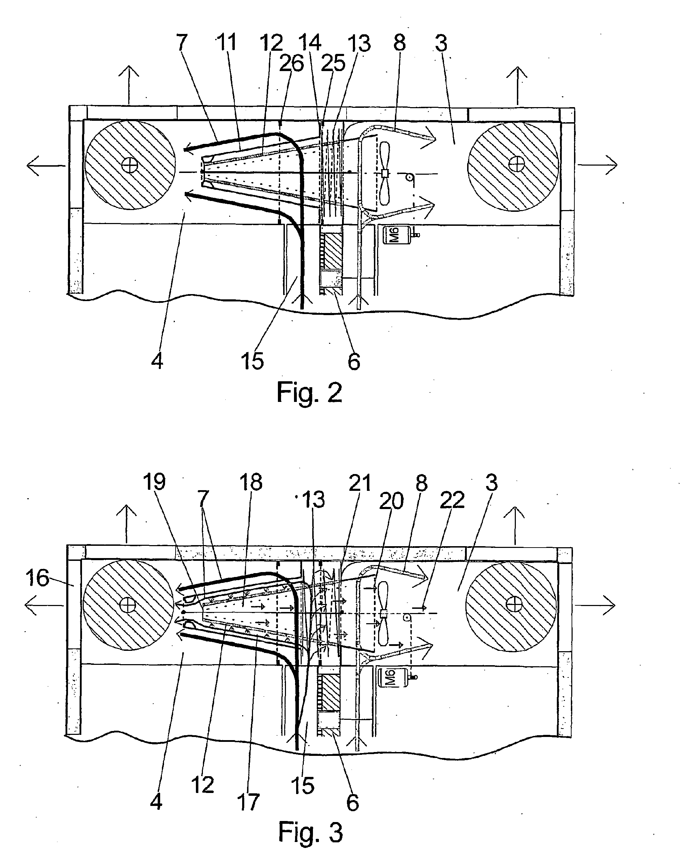

Der Filter 10 ist kegelförmig ausgebildet und weist einen kegelstümpfartigen Mantel 11 aus Metall und eine entsprechende kegelstumpfartige Membran 12 auf. Die Membran 12 ist durchlässig für Wassermoleküle und/oder Wasserstoffmoleküle und nicht durchlässig für größere Moleküle wie Sauerstoff und Stickstoff. Für eine derartige Membran 12 kann beispielsweise ein Osmosefilter verwendet werden. Die Membran 12 ist zumindest teilweise innerhalb des Mantels 11 angeordnet. Der Mantel 11 ist mit einer Druckfeder 13 beaufschlagt. Mittels eines Stellantriebes ist der Mantel 11 gegenüber der Membran 12 verschiebbar, um die Entfeuchtungsleistung des Filters 10 zu verstellen. Bei geschlossenem Filter 10, wie in Fig.2 dargestellt, ist der Mantel 11 derart in der Zuluftkammer 4 angeordnet, daß er mit seinem ringförmigen Boden 14 auf einer unteren Abschottplatte 25 aufsitzt und eine Trennwand zwischen der Zuluftkammer 4 und der Fortluftkammer 3 bildet. In dieser Stellung strömt der Zuluftstrom 7, welcher durch Kühlerelemente 15 vorbei an der Peltierkaskade 6 in die Zuluftkammer 4 geführt wird, vollständig über die Außenfläche des undurchlässigen Mantel 11 aus Metall in den zu klimatisierenden Raum, ohne daß er in Kontakt mit der Membran 12 kommt. Eine Luftentfeuchtung findet nicht statt.

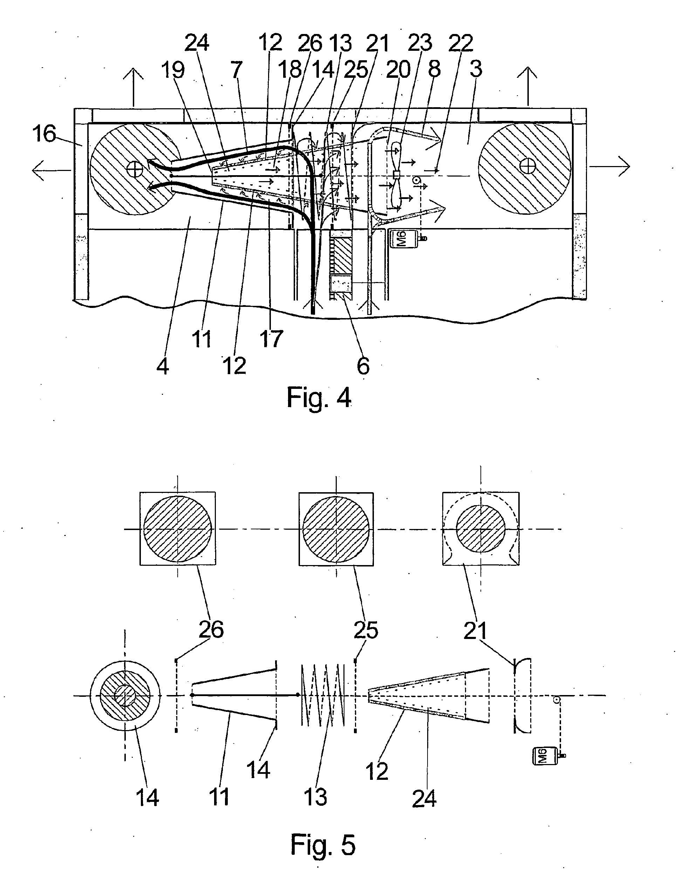

Fig.3 zeigt einen teilweise geöffneten Filter 10. Der Mantel 11 ist nun über die Druckfeder 13 und den Stellantrieb in Richtung der Austrittsöffnung 16 des Zuluftstromes 7 aus der Zuluftkammer 4 verschoben, so daß nun ein Teil des Zuluftstromes 7 in einem Zwischenraum 17 zwischen dem Mantel 11 und der Membran 12 verläuft. Dabei gelangen die Wassermoleküle und/oder Wasserstoffmoleküle aus dem Zuluftstrom 7 durch die Membran 12 in einen Innenraum 18 der Membran 12. Die kegelförmige Membran 12 ist an ihrem schmäleren Ende mit einer Scheibe 19 verschlossen, während das breitere Ende 20 der Membran 12 offen ist, mittels einer Halterung 21 zwischen Fortluftkammer 3 und Zuluftkammer 4 befestigt ist und in die Fortluftkammer 3 hineinragt. Wie aus Fig.5 ersichtlich, hat der kegelförmige Mantel 11 an seinem breiteren Ende den ringförmigen Boden 14. An der Halterung 21 stützt sich die Druckfeder 13 mit einem Ende ab, während das andere Ende gegen den ringförmigen Boden 14 des Mantels 11 drückt. Durch die Sogwirkung des Abluftstromes 8 werden die im Innenraum 18 befindlichen Wassermoleküle und/oder Wasserstoffmoleküle durch die Fortluftkammer 3 in Pfeilrichtung 22 nach draußen transportiert. Der Abtransport der Wassermoleküle und/oder Wasserstoffmoleküle kann durch einen Ventilator 23 innerhalb der Fortluftkammer 3 verstärkt werden. Bei halbgeöffnetem Filter 10 strömt ein anderer Teil des Zuluftstromes 7 über die Außenfläches des undurchlässigen Mantels 11 direkt in die Zuluftkammer 4 und wird nicht entfeuchtet. Je nach Stellung des Mantels 11 gegenüber der Membran 12 ist der Filter 10 mehr oder weniger geöffnet, so daß der Grad der Entfeuchtung kontinuierlich über den Stellantrieb und damit über die Position des Mantels 11 eingestellt werden kann. Bei vollständig geöffnetem Filter 10, wie in Fig.4 dargestellt, wird der ringförmige Boden 14 gegen eine obere Abschottplatte 26 gedrückt und der gesamte Zuluftstrom 7 muß vorbei an der Membran 12 durch den Zwischenraum 17 zwischen Mantel 11 und Membran 12, so daß eine maximale Entfeuchtung ermöglicht wird. Die Abschottplatte 26 bildet mit dem angedrückten Boden 14 einen Verschluß für den direkten Eintritt des Zuluftstromes 7 in die Zuluftkammer 4. Gleichzeitig ist die Abschottplatte 26 die obere Begrenzung der axialen Verschiebung des Mantels 11.

Zusätzlich kann der Grad der Entfeuchtung durch eine geeignete elektrische Spannung verändert werden. Hierzu bildet der Mantel 11 aus Metall eine Elektrode, während eine entsprechende kegelförmige Gegenelektrode 24 in Form eines Metallgitters innerhalb der Membran 12 angeordnet ist.

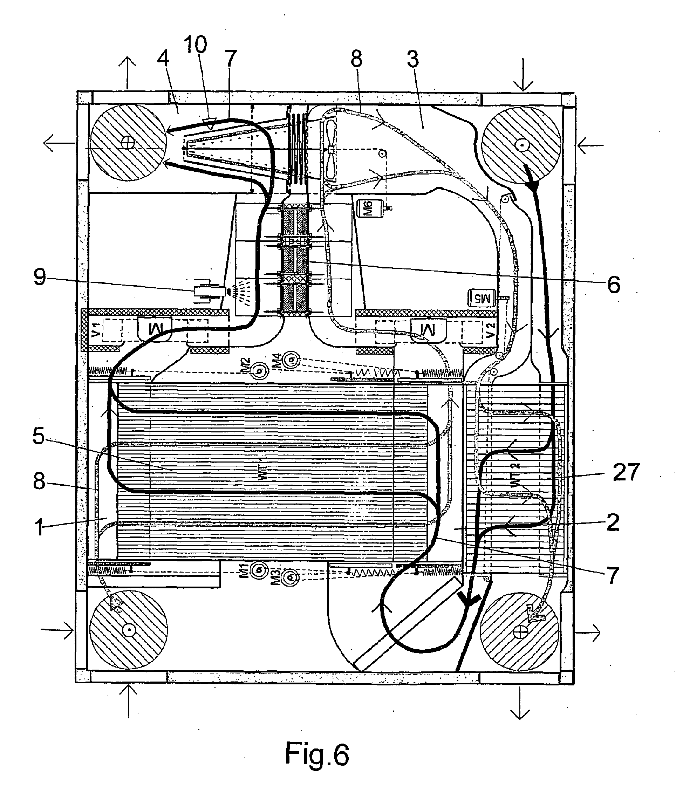

Bei dem Klimagerät gemäß Fig.6 ist ein zweiter Wärmetauscher 27 vorgesehen, durch welchen der Abluftstrom 8 geführt werden kann.

Durch die Anordnung des Zerstäubers 9 für Wasser im Bereich des Zuluftstromes 7. wird die Luft in dem zu klimatisierenden Raum befeuchtet. Der Filter 10 im Bereich des Zuluftstromes 7 bewirkt eine Luftentfeuchtung. Somit kann mit dem erfindungsgemäßen Klimagerät der Feuchtigkeitsgehalt in der Raumluft individuell und kontinuierlich eingestellt werden.

## Patentansprüche

1. Klimagerät mit einem Zuluftstrom (7) und einem Abluftstrom (8), wobei im Zuluftstrom (7) ein Zerstäuber (9) für Wasser zur Luftbefeuchtung und/oder eine Luftentfeuchtung vorgesehen ist,
**dadurch gekennzeichnet,**
**daß** ein für Wassermoleküle und/oder Wasserstoffmoleküle durchlässiger und in seiner Entfeuchtungsleistung verstellbarer Filter (10) zur Luftentfeuchtung angeordnet ist, wobei der Filter (10) einen undurchlässigen Mantel (11) und eine durchlässige Membran (12) aufweist, welche zur Verstellung der Entfeuchtungsleistung gegeneinander verschiebbar sind, und der Zuluftstrom (7) teilweise oder vollständig in einem Zwischenraum (17) zwischen dem Mantel (11) und der Membran (12) verläuft.

2. Klimagerät nach Anspruch 1,
**dadurch gekennzeichnet,**
**daß** der Zerstäuber (9) ein Piezokristall-Mikrozerstäuber ist.

3. Klimagerät nach Anspruch 1 oder 2,
**dadurch gekennzeichnet,**
**daß** der Mantel (11) und die Membran (12) jeweils kegelförmig ausgebildet sind, wobei die Membran (12) innerhalb des Mantels (11) angeordnet ist.

4. Klimagerät nach einem der vorhergehenden Ansprüche,
**dadurch gekennzeichnet,**
**daß** der Mantel (11) federbeaufschlagt und axial verschiebbar ist.

5. Klimagerät nach einem der vorhergehenden Ansprüche,
**dadurch gekennzeichnet,**
**daß** der Filter (10) in geschlossenem Zustand eine Trennwand zwischen einer Zuluftkammer (4) und einer Fortluftkammer (3) bildet.

6. Klimagerät nach einem der vorhergehenden Ansprüche,
**dadurch gekennzeichnet,**
**daß** der Mantel (11) aus Metall ist und eine Elektrode bildet und eine Gegenelektrode (24) innerhalb oder außerhalb der Membran (12) angeordnet ist.

7. Klimagerät nach Anspruch 6,
**dadurch gekennzeichnet,**
**daß** die Gegenelektrode (24) ein Metallgitter ist.

8. Klimagerät nach einem der vorhergehenden Ansprüche,
**dadurch gekennzeichnet,**
**daß** im Bereich einer Austrittsöffnung des Filters (10) ein Ventilator (23) angeordnet ist.

## Claims

1. Air-conditioning device with an input air flow (7) and an output air flow (8), wherein an atomiser (9) for water for humidifying air and/or an air dehumidifier is provided in the input air flow (7), **characterised in that** a filter (10) for dehumidifying air is arranged, which is permeable to water molecules and/or hydrogen molecules and can be adjusted with regard to its dehumidification capacity, wherein the filter (10) has an impermeable casing (11) and a permeable membrane (12), which are displaceable with respect to one another to adjust the dehumidification capacity, and the input air flow (7) runs partially or completely in an intermediate space (17) between the casing (11) and the membrane (12).

2. Air-conditioning device according to claim 1, **characterised in that** the atomiser (9) is a piezo crystal micro-atomiser.

3. Air-conditioning device according to claim 1 or 2, **characterised in that** the casing (11) and the membrane (12) are conical in each case, the membrane (12) being arranged inside the casing (11).

4. Air-conditioning device according to any one of the preceding claims, **characterised in that** the casing (11) is spring-loaded and axially displaceable.

5. Air-conditioning device according to any one of the preceding claims, **characterised in that** the filter, in the closed state, forms a partition between an input air chamber (4) and an outlet air chamber (3).

6. Air-conditioning device according to any one of the preceding claims, **characterised in that** the casing (11) is made of metal and forms an electrode, and a counter electrode (24) is arranged inside or outside the membrane (12).

7. Air-conditioning device according to claim 6, **characterised in that** the counter electrode (24) is a metal grid.

8. Air-conditioning device according to any one of the preceding claims, **characterised in that** a ventilator (23) is arranged in the region of an outlet opening of the filter (10).

## Revendications

1. Appareil de climatisation à courant d'air d'arrivée (7) et à courant d'air de sortie (8), sachant qu'un atomiseur (9) d'eau d'humidification d'air, et/ou une déshumidification d'air, est (sont) prévu(e)(s) dans ledit courant d'air d'arrivée (7),
**caractérisé par**
la présence d'un filtre (10) de déshumidification d'air qui est perméable à des molécules d'eau et/ou à des molécules d'hydrogène, et dont la puissance de déshumidification est réglable, ledit filtre (10) comprenant une enveloppe imperméable (11) et une membrane perméable (12) qui peuvent coulisser l'une par rapport à l'autre en vue de régler la puissance de déshumidification, le courant d'air d'arrivée (7) circulant, en partie ou en totalité, dans un espace intermédiaire (17) situé entre ladite enveloppe (11) et ladite membrane (12).

2. Appareil de climatisation selon la revendication 1,
**caractérisé par le fait**
**que** l'atomiseur (9) est un micro-atomiseur à cristal piézoélectrique.

3. Appareil de climatisation selon la revendication 1 ou 2,
**caractérisé par le fait**
**que** l'enveloppe (11) et la membrane (12) sont respectivement de réalisation tronconique, ladite membrane (12) étant logée à l'intérieur de ladite enveloppe (11).

4. Appareil de climatisation selon l'une des revendications précédentes,
**caractérisé par le fait**
**que** l'enveloppe (11) est sollicitée élastiquement ou par ressort et peut coulisser axialement.

5. Appareil de climatisation selon l'une des revendications précédentes,
**caractérisé par le fait**
**que** le filtre (10) matérialise, à l'état fermé, une cloison séparatrice entre une chambre (4) d'arrivée d'air et une chambre (3) de circulation d'air ultérieure.

6. Appareil de climatisation selon l'une des revendications précédentes,
**caractérisé par le fait**
**que** l'enveloppe (11) est réalisée en métal et forme une électrode, une électrode complémentaire (24) étant disposée à l'intérieur ou à l'extérieur de la membrane (12).

7. Appareil de climatisation selon la revendication 6,
**caractérisé par le fait**
**que** l'électrode complémentaire ou contre - électrode (24) est un grillage métallique.

8. Appareil de climatisation selon l'une des revendications précédentes,
**caractérisé par le fait**
**qu'**un ventilateur (23) se trouve dans la région d'une ouverture de sortie du filtre (10).
